Europäisches Patentamt

European Patent Office

Office européen des brevets

(11) Publication number: **0 187 374**
A2

# EUROPEAN PATENT APPLICATION

(21) Application number: 85116541.5

(22) Date of filing: 24.12.85

(51) Int. Cl.⁴: **G 09 F 9/30**
G 02 F 1/17, G 06 F 15/22
G 07 B 17/02

(30) Priority: 24.12.84 US 685681
24.12.84 US 685812

(43) Date of publication of application:
16.07.86 Bulletin 86/29

(84) Designated Contracting States:
CH DE FR GB LI

(71) Applicant: PITNEY BOWES, INC.
Walter H. Wheeler, Jr. Drive
Stamford Connecticut 06926(US)

(72) Inventor: Sansone, Ronald P.
4 Trails End
Weston, CT 6883(US)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) Non-volatile memory display cells and systems.

(57) An electrolytic display cell includes two plates (32, 34), one of which is covered by a semi-transparent electrode (14). The display is obtained by connecting the electrode (14) to a source of potential of a first polarity and erasing is obtained by connecting the electrode (14) to a source of potential of a second polarity. The electrode has a first terminal (14a) and a second terminal (14b). The first and the second terminal are adapted to be connected to apparatus for detecting whether the electrode has been made visible. Also described is a system, which may be a postage meter system, including computing means for performing data computations. A non-volatile memory means is operatively coupled to the computing means, and may employ the electrolytic display cell. The non-volatile memory means includes locations for storing data, which are physically accessible such that the locations can be human visually readable to determine the data values stored therein. The non-volatile memory means is operatively coupled to the computing means so that the computing means can write data into the non-volatile memory means and can read stored data from the non-volatile memory means. The system is particularly advantageously incorporated as part of a non-volatile memory system for a postage meter.

FIG. 2

Croydon Printing Company Ltd.

The present invention relates to non-volatile memory cells and to memory systems employing such cells, e.g. for electronic postage meters.

Non-volatile display cells have been developed. Two such non-volatile display cells are shown in U.S. Patent No. 4,309,083 and in U.S. Patent No. 4,306,755.

These non-volatile display cells are of the plating variety and have been suggested as being useful in seven segment displays as for example for watches and clocks.

In display cells of the above type, an electrolytic solution such as a metal salt in aqueous solution is disposed between an electrode or segment and the ground plane. Leads are connected to the ground plane and electrode and are brought out to a connector. The display electrode or segment may be a tin oxide coating, such as a nesa coating, deposited on a glass support substrate. In a like manner, the ground plane may also be a tin oxide coating, such as a nesa coating, deposited on a glass substrate. The various leads may be fabricated from tin oxide or other suitable material and encapsulated in an insulating material such as silicone dioxide to prevent interaction with the electrolytic solution. The structure and operation of the display as associated with the write and erase operation only is disclosed in the above noted U.S. Patents, namely U.S. Patent No. 4,309,083 and in U.S. Patent No. 4,306,775.

The disclosures of these two patents are hereby incorporated by reference into the disclosure of this application. It should be noted that the system disclosed in U.S. Patent No. 4,306,775 employs an additional electrode for controlling the writing and erase current associated with plating and deplating the display segment.

U.S. Patent No. 4,345,820 discloses an apparatus for the visual display of electrical signals recorded on a magnetic medium or support in the form of a magnifying glass which is a plate or sheet of transparent material in which there is a dimple closed by a membrane. The volume of a dimple containing a developing film sensitive to

- 3 -

0187374

the magnetic field of a recording medium dispersion in a liquid. Under action of a magnetic field, the ferrite particles are displaced and give an image of the magnetic state of the medium.

Postage meters are mass produced devices for printing a defined unit value for governmental or private carrier delivery of parcels and envelopes. The term postage meter also includes other like devices which provide unit value printing such as tax stamp meters. Postage meters include internal accounting devices which account for postage value representation which is stored within the meter. The accounting device accounts for both the recharging of the meter with additional postage value and the printing of postage by the meter printing mechanism. No external independent accounting system is available for accounting for the postage printed by the meter. Accordingly, postage meters must possess a high reliability to avoid the loss of user or governmental funds stored within the meter and dispensed by printing postage.

Electronic postage meters have been developed and are disclosed, for example, in U.S. Patent No. 3,978,457 , in U.S. Patent No. 4,301,507 and, in European Patent Application, publication No. 0 019 515.

Such meters have electronic accounting circuits which include electronic non-volatile memory capability for storing postage accounting information. The accounting circuits and associated postage printing mechanism are physically sealed within a tamper resistant enclosure. The non-volatile memories are provided for storing critical postage accounting information when external operating power is not applied to the meter.

Various types of accounting information may be stored in the meter non-volatile memory. This information includes, for example, the total amount of postage remaining in the meter for subsequent printing (descending register) and the total amount of postage printed by the meter (ascending register). Other types of accounting or operating data may also be stored. For example, service information in the form of error codes denoting various types of malfunctions or abnormal conditions encountered during operation of the meter may be stored in non-volatile memories. This facilitates the evaluation of the operating experience of each meter to assist in its repair, should that be necessary, and to accumulate data helpful in the design of electronic postage meters.

Non-volatile memories as well as the other electronic accounting circuitry within electronic postage meters are susceptible to disturbances which can either destroy information or cause erroneous information to be generated. The electronic circuits are susceptible to electromagnetic radiation and electrical transients which can interfere with the proper operation of the meter and accurate storage of information. These types of effects can result in a loss of funds to the users and, accordingly, it has been recognized that various types of protection must be provided to avoid such undesirable results as the data cannot be reconstructed in most instances from other externally available records.

One type of sequence of operation when a malfunction is detected can include locking meter against continued operation. In such case, a meter shutter bar may be positioned to prevent further operation of the printing mechanism and an interposer moved into a position to lock the shutter bar in its blocking position. When this occurs, the meter becomes inoperable to print further postage. Additionally, under certain failure or malfunction conditions, the non-volatile memories may not be accessible by the keyboard actuation. An example of such a malfunction would include a failure of the microprocessor in the meter or necessary peripheral circuits such as, depending upon the design, system clocks and memory address decoders.

Systems such as that disclosed in the above-noted European Patent Application have also been designed to intentionally limit access to non-volatile memory when certain failure conditions are detected.

When the meter malfunctions and is taken out of service, it is necessary to determine the remaining balance of postal funds stored within the meter non-volatile memory and available for printing (descending register) so that such amount can be refunded to the customer or user. Depending on the type of meter usage and the point in time when a malfunction occurs, many thousands of dollars of postage may be stored in the non-volatile memory descending register. However, before a refund can be made to the user or customer, it is necessary to read out the contents of the non-volatile memory. This is not possible in systems where access to the non-volatile memory stored data requires utilization of the meter microprocessor or peripheral memory circuits, should these be inoperative. In this case, the meter housing must be opened and the meter memory physically accessed before proper amount of funds to be refunded can be determined.

In the electronic postage meter system described in the above-noted European Patent Application, when the meter becomes inoperable due to a fault condition, the non-volatile memories are accessible by an external channel connected from outside of the sealed housing. Once the meter has been set to a faulted state, the non-volatile memory contents can be read out independently of the meter microprocessor and the microprocessor is prevented from accessing the non-volatile memory. Necessary power to read the non-volatile memory is supplied to the memories through the external channel to enable reading of the non-volatile memory contents through the external channel without supplying power to the microprocessor.

Another system for reading the contents of the non-volatile memory when an electronic postage meter is inoperative is disclosed in U.S. Patent No. 4,471,440 issued September 11, 1984.

The system includes having a plurality of locations for storing the postage accounting data in predetermined locations of a non-volatile memory which are physically accessible when the memory is removed from the meter. The locations are chosen so that they can be scanned by a scanning device to determine the orientations of the bit patterns without energizing the non-volatile memory and without physically altering the non-volatile memory structure.

Still another system for accessing electronic postage meter non-volatile memories when the meter is inoperative is described in U.S. Patent No. 4,507,744 issued March 26, 1985.

In this application, an auxiliary communication channel is provided containing read access lines to the non-volatile memory. Access to this communication channel is provided through a sealed access door, which provides both evidence of tampering when opened and electromagnetic interference protection when sealed. The access door is designed for operation on a single occasion only. Access through the door precludes further normal meter operation by deactivating the meter in such a manner that reactivation is not possible without disassembling of the meter housing which will result in evidence of tampering. Thus, the customer has immediate access to the postage funds upon reading the memory contents while achieving protection of the data, prevention of unauthorized alteration of the postage funds balance and unauthorized use of the meter.

In one aspect, the present invention provides a display cell with non-volatile characteristics. The display cell structure provides the ability to determine by machine whether a display has been obtained to thereby render a portion of the cell visible to the human eye.

It has also been discovered that a non-volatile display cell can be provided which provides both human visually readable and machine readable storage of data. A non-volatile memory display cell of the present invention is adapted to be connected in a system, without the need for battery backup, such that data can be stored during periods of power interruption which can be human visually readable and which same data further upon the restoration of power and during periods of normal operation, can be machine readable.

An electrolytic display cell, according to one aspect of the present invention, includes two plates whereof one is covered by a semi-transparent electrode. An electrolyte solution containing platable marking particles is disposed between the plates. The display is obtained by connecting the electrode to a source of potential of a first polarity and the erasing by connecting the electrode to a source of potential of a second polarity. The electrode has a first terminal and a second terminal. The first and the second terminals are adapted to be connected to apparatus for detecting whether a display has been obtained on the electrode.

In another aspect, the present invention provides a non-volatile memory system where stored data is both human visually readable and machine readable. In the present system, without the need for battery backup, information can be stored during periods of power interruption which can be human visually readable and which same information, upon the restoration of power and during periods of normal operation, can be machine readable. By being human visually read, the system allows easy and rapid reading of the data stored in the non-volatile memory without the need for special equipment. By being machine readable, the very same data can be processed at high speed. The system provides a coincidence between what is seen and what is machine read.

It has also been discovered that the memory system has unique applicability to postage meter systems to allow access to a postage meter non-volatile memory contents without the requirement of an external communications channel or the necessity of opening the main meter housing to gain access to the memory. The system thus allows easy and rapid recovery of the memory contents so that a user can be refunded postage amounts stored within an inoperative meter without the need for any additional special equipment.

In accordance with a further aspect of the invention, a memory is provided within a postage meter secured housing and positioned to be available in human visually readable form. In accordance with a preferred feature, the memory contents can be both machine readable as well as human visually readable. The system enables the meter microprocessor to access the memory and to utilize the same data as is available by human visual inspection of the meter.

A system embodying the present invention may include computing means for performing data computations. A non-volatile memory means is operatively coupled to the computing means. The non-volatile memory means includes locations for storing data. The locations being physically accessible such that the locations can be human visually readable to determine the data values stored therein. The non-volatile memory means is operatively coupled to the computing means such that the computing means can write data into the non-volatile memory means and can read stored data from the non-volatile memory means.

The system described above is particularly advantageously incorporated into a postage meter. A postage meter thus embodying the system is adapted to be energized by an external source of operating power and includes a postage printing means for printing postage and computing means coupled to the postage printing mechanism for accounting for postage printed by the printing means. A non-volatile memory means for storing data is operatively coupled to the computing means. The non-volatile memory means includes locations for storing data when the postage meter is not energized by the external source of operating power. The locations are human visually readable to determine the data stored therein.

Reference is now made to the drawings wherein like reference numerals designate similar elements in the various figures, and in which:

FIGURE 1 is a diagramatic view of a seven segment non-volatile memory and display cell suitable for use with embodiments of the present invention shown in FIGURES 3-7;

FIGURE 2 is a side view of the seven segment non-volatile memory and display shown in FIGURE 1;

FIGURE 3 is a diagramatic view of a system according to the embodiment of the present invention with a single segment of the non-volatile memory and display shown in FIGURE 1 and a system for detecting whether the display element has been made visible;

FIGURE 4 is a diagramatic view of the system shown in FIGURE 3 of a single segment of the display shown in FIGURE 1 and a system for detecting whether the display element has been made visible having the ground return switch in an open condition to allow the impedance value of the display element to be determined;

0187374

FIGURE 5 is a diagramatic view of another system according to another embodiment of the present invention with a single segment of the seven segment display of FIGURE 1 employing an alternate system for detecting whether the display element has been made visible;

FIGURE 6 is an electronic postage meter system and employing a plurality of display elements shown in FIGURE 1 as both the non-volatile memory and a display for the system; and

FIGURE 7 is an alternate embodiment of the electronic postage meter system shown in FIGURE 6 and employing a different method for determining the value of the display elements.

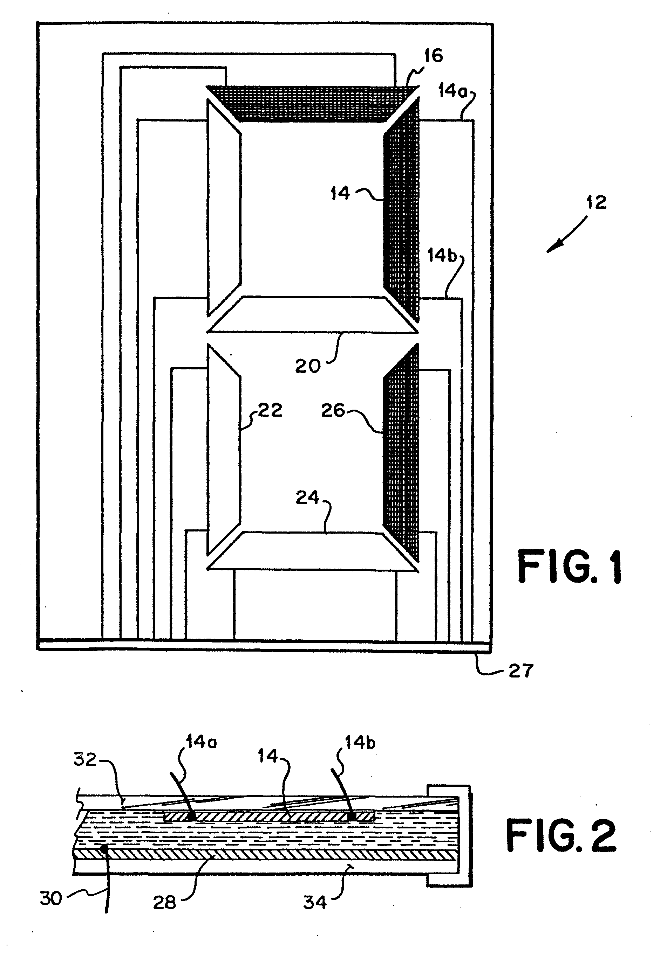

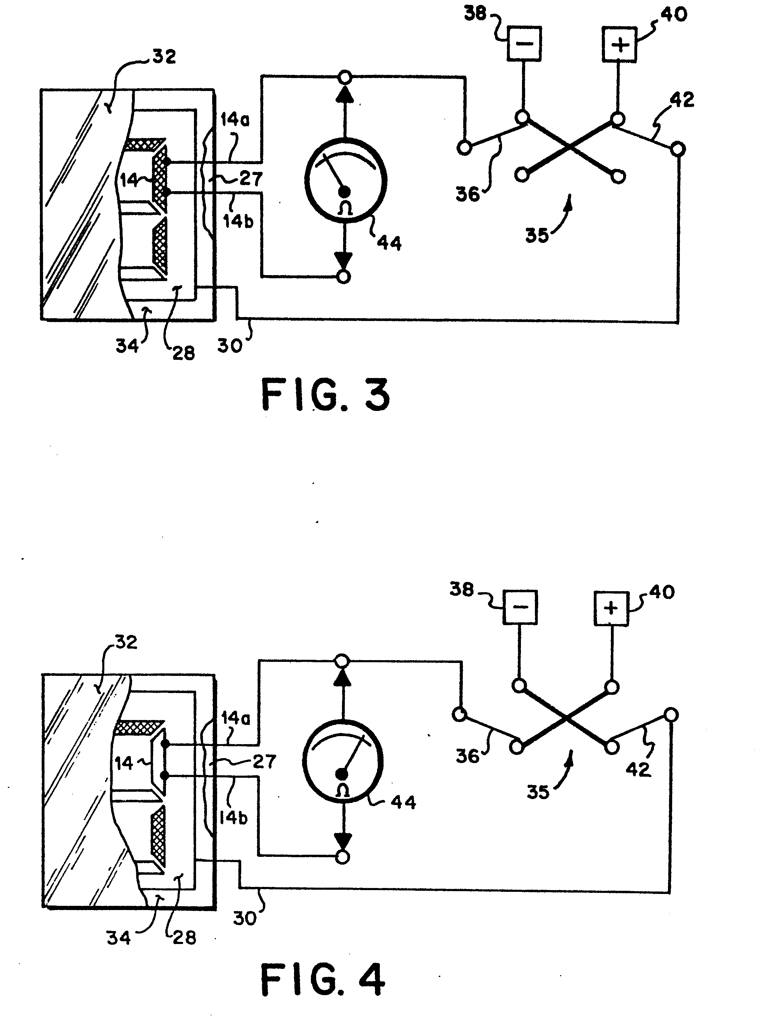

Reference is now made to FIGURE 1. A memory display 12 includes seven segments 14, 16, 18, 20, 22, 24, and 26. The segments each include two leads connected at either end of the segment. Referencing segment 14, a first lead 14a is connected to the top end of the segment and a second lead 14b is connected to the bottom end of the segment. Each of the remaining segments have similar leads connected thereto. The leads for each segment are brought to an edge connector 27 for further connection to other circuitry, as for example as is shown in FIGURES 4-7. As will be explained in greater detail hereinafter, one of the leads for each segment is employed in connection with writing and erasing the display segment while the other lead, in conjunction with the first lead, is used in reading by mechanical means, such as a computer, to determine whether or not the segment has been made visible.

Reference is now made to FIGURE 2 which shows additional structure of the display. A ground plane 28 is spaced apart from the display segment 14, as well as the other display segments 16, 18, 20, 22, 24, and 26. An electrolytic solution such as a metal salt in aqueous or non-aqueous solution is disposed between the segment 14 and the ground plane 28. End caps, only one of which is shown, are provided to retain the solution or paste in the proper position between the segment 14 and ground plane 28. A lead 30 is connected to the ground plane 28 and is brought out to the connector 26. The display segment 14 may be a tin oxide coating, such as a "nesa" coating, deposited on a glass support substrate 32. In a like manner, the ground plane 28 may be a silver coating, deposited on a glass substrate 34. The various leads may also be fabricated from tin oxide or other suitable material and encapsulated in an insulating material such as silicon dioxide to prevent interaction with the electrolytic solution. The structure and operation of the display as associated with the write and erase operation only is disclosed for example in U.S. Patent No. 4,309,083 for ELECTRODE FOR ELECTROLYTIC CELL PARTICULARLY FOR ELECTROLYTIC DISPLAY CELLS AND PROCESS OF MANUFACTURE and in U.S. Patent No. 4,306,775 for ELECTROLYTIC DISPLAY CELL AND CONTROL THEREFORE. The system disclosed in U.S. Patent No. 4,306,775 employs an additional electrode for controlling the writing and erase current associated with plating and deplating the display segment. The disclosures of U.S. Patent 4,309,083 and 4,306,755 are hereby incorporated by reference into the disclosure of this application.

Reference is now made to FIGURE 3 which shows a single display segment. Lead 14a is connected through connector 27 to a switch 35 which is adapted to be switched to connect leads 41a and 30 between a source of positive potential 40 and a source of negative potential 38. With the return lead 30 connected via switch 42 contact to the positive potential, and with switch 36 contact connected to the source of negative potential 38, the metal salt in the electrolytic solution will be plated onto the segment 14 making the segment visible to the naked eye. At the same time, by plating the electrode with highly conductive silver, the electrode is made significantly more conductive, thereby reducing its bulk impedance as measured by ohmmeter 44.

It will be appreciated that the actual change of conductivity is highly related to the area and thickness of the silver coating. The change will be in accordance with the formula set forth below.

In the formula for the resistance of a strip of Nesa (stannic oxide) coated with silver, where L is the length of the segment, W is the width of the segment, $h_{ag}$ is the thickness or height of the silver, and $h_{Nesa}$ is the thickness or height of the nesa. The bulk resistivity of silver is $P_{Ag} = 1.6 \times 10^{-8} \Omega m$.

The bulk resistivity of Nesa is about $P_{Nesa} \simeq 10^{-5} \Omega m$.

The resistance of the silver is $R_{Ag} = P_{Ag} \dfrac{L}{W\, h_{Ag}}$.

The resistance of the Nesa is $R_{Nesa} = P_{Nesa} \dfrac{L}{W\, h_{Nesa}}$.

The parallel resistance is:

$$R = \frac{R_{Ag}\, R_{Nesa}}{R_{Ag} + R_{Nesa}} = R_{Ag}\left[\frac{1}{1 + R_{Nesa}/R_{Ag}}\right] = P_{Ag}\frac{L}{W\, h_{Ag}}\left[\frac{1}{1 + \dfrac{P_{Ag}}{P_{Nesa}}\dfrac{h_{Nesa}}{h_{Ag}}}\right]$$

With the return switch 42 connecting the plane lead 30 to negative potential 38 and the switch 36 connected to the source of positive potential 40, any plating on the segment 14 will be removed and returned to the electrolytic solution. This will cause the display segment to be substantially invisible to the naked human eye such as shown in FIGURE 4. The cycle of plating and deplating can be repeated at a sufficiently high rate of high speed to be used as both a display and a nonvolatile memory.

Ohmmeter 44 is connected between the segment leads 14a and 14b to provide a device for detecting whether or not the display segment has been made visible to illuminate a particular data value or has been made substantially invisible to represent, in conjunction with other display segments, another human readable data value. In this manner, the display segments are both machine readable and human readable allowing the display non-volatile memory segments to provide the same data in both convenient human readable form and in machine readable form.

When the display segment impedance is measured by ohmmeter 44, should it be desired switches can be provided and opened to prevent additional plating or deplating of the display segment due to the ohmmeter current. However, in the normal situation the current will be so small as to be inconsequential in this regard, especially as the ohmmeter is not connected by any lead to plane 28 and is only connected to the segment. Opening such a switch breaks the circuit path between the display segment and the plane 28 thereby avoiding further electrolytic action. The significant current flow is through the display segment 14 and the display segment leads 14a and 14b and not the electrolytic solution. The operation of any switch decoupling plane 28 from the source of positive and negative potential 40 and 38, respectively, can be an electronic switch, such as a transistor type switch, and can be ganged for synchronous operation with the operation of ohmmeter 44.

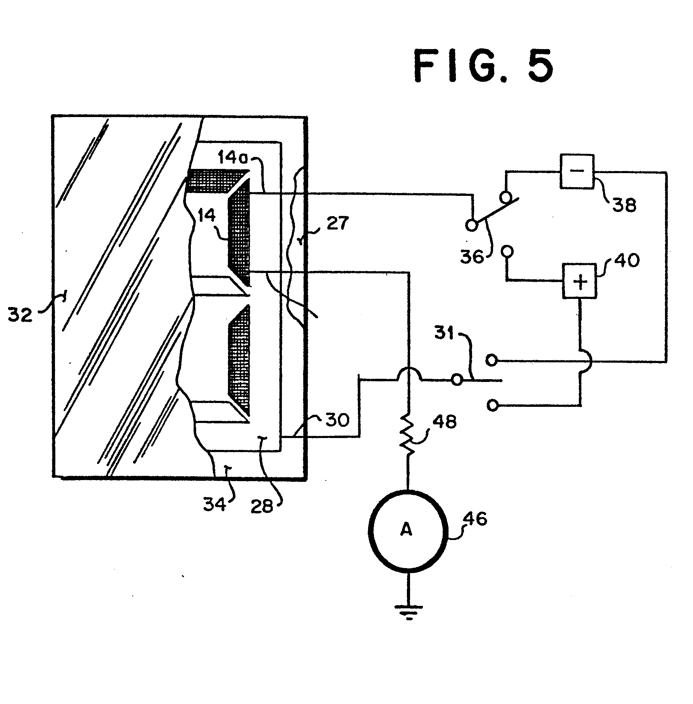

An alternate method of detecting the visible condition of the display segments is shown in FIGURE 5. The presence or absence of a plating on segment 14 is determined by ammeter 46 which is connected in series with current limiting resistor 48 between segment lead 14b and ground. With the switch 36 connected to either the negative source of potential 38 or the positive source of potential 40, a current is caused to flow through the segment and through the ammeter. This provides a machine readable indication of whether or not the display segment is in human visual readable form or is substantially invisible. In the embodiment, plane 28 is also selectively connected via lead 30 and switch 31 to the source of negative potential 38 and positive potential 40. The switches 36 and 31 are ganged for operation and operate in conjunction with operation of ammeter 46 to insure proper current flow during plating, deplating and ammeter operation. Moreover, the ammeter reading can be achieved in a pulse mode resulting in an extremely low current of short duration. Current limiting resistor 48 limits the current to a level which is insufficient to cause the segment to be further plated or to be deplated. It should be noted that switch 31 can be coupled to operate in conjunction with the reading of the condition of the segment 14 to further avoid any possible problem of plating or deplating.

It should be recognized that other segment machine readable techniques are suitable for use with the systems described above, as for example, by utilizing voltmeters.

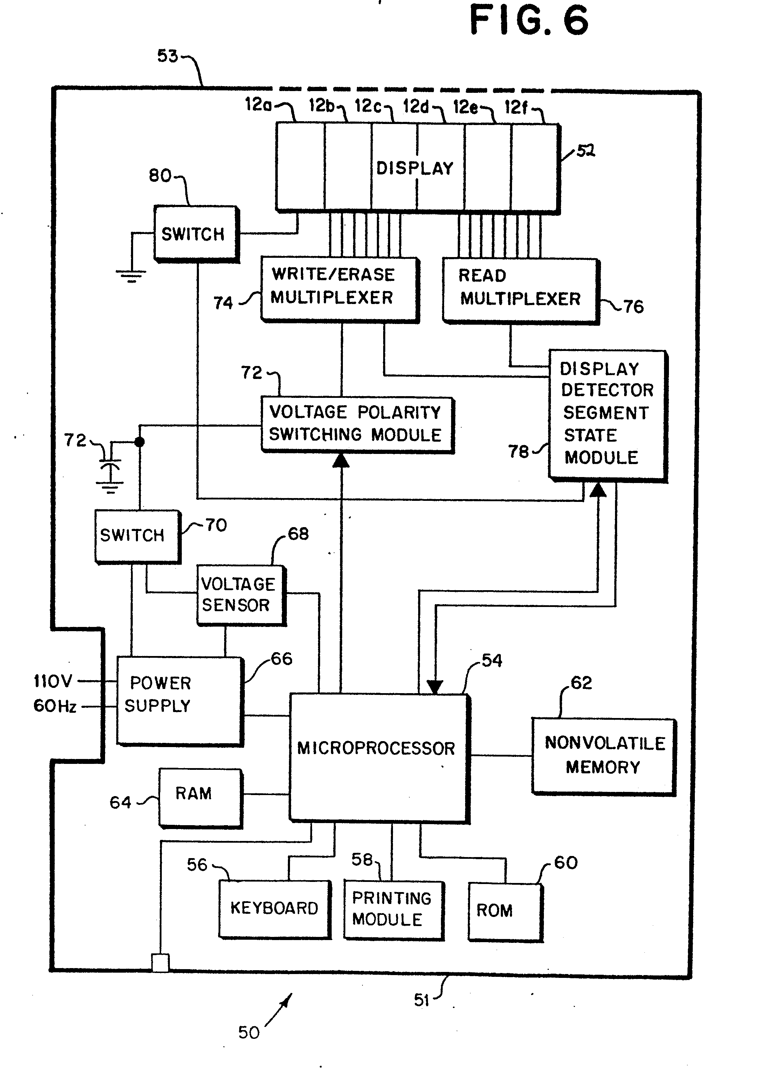

Reference is now made to FIGURE 6. An electronic postage meter 50 includes a memory display 52 which will be described in greater detail hereinafter consisting of a plurality of display/non-volatile memory seven segment cells 12a, 12b, 12c, 12d, 12e, and 12f. The number of display non-volatile memory cells is not central to the invention and depends upon the nature of digits or data to be displayed. The electronic postage meter 50 includes a tamper resistant housing 51 with a display aperture area 53. The display aperture area may comprise a screen type structure to provide additional shielding for the display non-volatile memory cells to avoid the effects of electromagnetic radiation.

The electronic postage meter 50 includes a microprocessor 54 operatively connected to an electronic postage meter keyboard 56, a meter postage printing module 58, and a read-only memory (ROM) 60. The read-only memory 60 contains the operating program of the postage meter which may be similar to the operating programs shown in conjunction with the above noted electronic postage meter patents. A non-volatile memory 62 and a random access memory 64 may also be connected to the microprocessor. The non-volatile memory 62 provides a redundant memory for the system to the display memory 52 and is an optional element in the system. The random access memory 64 provides a memory for temporarily storing information during the operation of the microprocessor 54. It should be noted that the non-volatile memories 52 and 62 provide a means for data storage when power is removed from the meter, particularly for critical accounting data such as the current ascending register value and the current descending register value of the meter. Additional data may be stored in the non-volatile memories such as codes associated with service experience for the meter.

A power supply 66 is energized by an external source of operating potential such as a 110 volt, 60 hertz supply. The power supply is coupled to the microprocessor 54 and, other components requiring energization. A voltage sensor 68 is coupled to both the power supply and microprocessor. When a power failure is detected, the voltage sensor 68 provides a signal to the microprocessor. This causes the microprocessor to initiate a power down routine which is part of the operating

- 19 -

0187374

program stored in the read-only memory 60. The voltage sensor is also coupled through a switch 70 to a voltage polarity switching module 72 which will be described in greater detail hereinafter. Switch 70 operates to decouple the display memory from the power supply during power failure conditions such that the display memory is energized by a storage capacitor 73 for a sufficient period of time to complete the writing of information to the display memories 52 and 62 which are in progress and to write any critical information from the random access memory into the non-volatile memories. Capacitor 72 provides power to the microprocessor and other vital portions of the meter necessary to complete any critical operations in progress.

The segment leads of each of the cells 12a, 12b, 12c, 12d, 12e, and 12f are connected to a write/erase multiplexer 74 and the "b" leads from each of the display cell segments are connected to a read multiplexer 76. Although for a seven segment display cell arrangement forty-two leads would be connected to each multiplexer, seven for each display cell, only eight are shown for the sake of simplicity. Alternative multiplexing techniques can be employed where the ground plane leads of the various cells are multiplexed so that all the "a" leads and "b" leads of each of the various segments can be connected together to reduce the number of leads to be multiplexed. A display detector segment state module is provided which is operatively connected with microprocessor 54. The display detector segment state module is connected to the multiplexers 74 and 76 and additionally coupled to a display cell ground return switch 80.

In this mode of operation, the display detector segment state module functions similar to the ohmmeter system described in FIGURES 3 and 4 to detect the condition of the various segments, that is, to determine whether the various display non-volatile memory segments are human readable or substantially invisible. This allows the same human readable data to be detected and coupled in digital data formats to the microprocessor for processing.

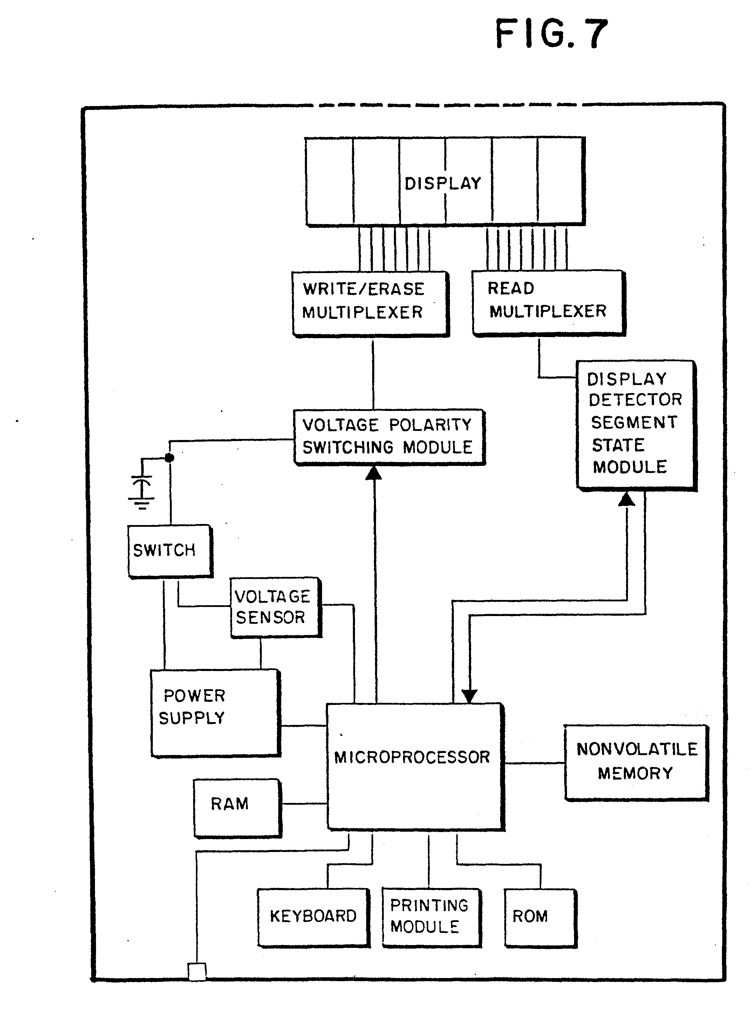

Reference is now made to FIGURE 7. The microprocessor 54 operates the voltage polarity switching module 72, in conjunction with the write/erase multiplexer 74, to place a predetermined voltage of a predetermined duration on selected display non-volatile memory segments. This causes the display segment to be plated and rendered visual, for example constituting a 1 or to cause the display segment to become deplated and substantially human invisible to constitute, for example a 0. In this way, both human visual readable and machine readable binary information is simultaneously stored in each display non-volatile memory display cell segment. The multiplexers serve to selectively connect the voltage polarity switching module 72 as well as the display detector segment state module 78 with selected display non-volatile memory segments of each of the display non-volatile memory cells 12a through 12f. The voltage level and duration are a matter of design choice based on the size of the segment, type of electrolytic solution employed and density differential desired between plated and deplated display cell segments.

Reference is now made to FIGURE 7. The system in FIGURE 7 incorporates in the display detector segment state module a current limiting measuring technique similar to that shown in FIGURE 5. Accordingly, the ground return switch 80 is no longer employed. However, as mentioned in connection with FIGURE 5, should it be desired, the ground return plane can be coupled through a switch operatively connected to the display detector segment state module to synchronously connect and disconnect the ground plane from its ground path return at the appropriate time to enable both plating and deplating and also to enable the machine reading of the segment condition.

It should be understood that implementation of other variations and modifications of the invention in its various aspects will be apparent to those skilled in the art, and that the invention is not limited by the specific embodiment described. For example, other nonvolatile display devices which involve a significant change in a measurable physical property of the display segments are suitable for use in the present invention and are intended to be covered by the claims. One such display device example is the EPID type display such is shown in U.S. Patent No. 4,218,302 for ELECTROPHORETIC DISPLAY DEVICES. Moreover, the electrolytic solution which may contain one of the group of silver, iodide, bromide and chloride and also containing a salt of one of the group of ammonium and halide for the displays disclosed in this application, may be composed of other suitable solutions allowing plating and deplating. It is therefore contemplated to cover by the present

0187374

patent any and all modifications, variations or equivalents of the invention that fall within the true spirit and scope of the basic underlying principles discosed and claimed herein.

Claims:

1. An electrolytic display cell comprising two plates (32, 34) one of which is covered by a semi-transparent electrode (14), an electrolyte solution containing platable marking particles disposed between said plates, the display being obtainable by connecting the electrode (14) to a source of potential of a first polarity and the erasable by connecting the elecgrode (14) to a source of potential of a second polarity, characterized in that said electrode (14) and a first terminal (14a) and a second terminal (14b).

2. An electrolytic display cell as claimed in claim 1, wherein said frist and said second terminals (14a, 14b) are adapted to be connected to means for detecting whether a display has been obtained on said electrode (14).

3. An electrolytic display cell as claimed in claim 1 or 2, wherein said electrode (14) is a substantially linear shape electrode with end areas and said first and said second terminals (14a, 14b) are connected to said electrode adjacent opposite ends areas of said electrode (14).

4. An electrolytic display cell as claimed in any preceding claim, wherein said solution comprises an electrolyte containing one of the group of silver, iodide, bromide and chloride, and also containing a salt of one of the group of ammonium and halide.

5. A system (50) comprising computing means (54) for performing data computations, characterized by a non-volatile memory means (52; 12a, 12b, etc.) operatively coupled to said computing means (54), said non-volatile memory means (52) including locations for storing data, said locations being physically accessible such that said locations can be human visually readable to determine said data values stored therein, and said non-volatile memory means (52) being operatively coupled to said computing means (54) such that said computing means (54) can write data into said non-volatile memory means (52) and can read stored data from said non-volatile memory means (52).

6.     A system as claimed in claim 5, wherein said non-volatile memory means (52) is a plating display type device (12).

7.     A system as claimed in claim 6, wherein said non-volatile memory plating display device includes first terminal means (14a) coupled to said computing means (54) for energizing said display to store and display data and second terminal means (14b) coupled to said computing means (54) for use by said computing means for reading data stored in said display (52).

8.     A system including computing means (54) for performing data computations, characterized by a non-volatile memory means (52) operatively coupled to said computing means (54), said non-volatile memory means (52) including locations for storing data, said non-volatile memory means (52) comprising a first electrode (14) having a first terminal means (14a) coupled to said computing means (54) for energizing said display to store and display data and second terminal means (14b) coupled to said computing means (54) for use by said computing means for reading data stored in said display.

9. A system as claimed in claim 6, wherein said non-volatile memory means (52) further comprises a second electrode (28) spaced apart from said first electrode (14) and a solution disposed adjacent said first and said second electrodes.

10. A system as claimed in claim 9, wherein said solution comprises marking particles which can be plated onto said first electrode (14) and deplated from said first electrode.

11. A system as claimed in claim 9 or 10, wherein said solution comprises an electrolyte containing one of the group of silver, iodide, bromide and chloride, and also containing a salt of one of the group of ammonium and halide.

12. A postage meter adapted to be energized by an external source of operating power and including a postage printing means (58) for printing postage and computing means (54) coupled to said postage printing means (58) for accounting for postage printed by said printing means, characterized by a non-volatile memory means (52, 12a, 12b, etc.) for storing data, said non-volatile memory means (52) operatively coupled to said computing means (54), said non-volatile memory means (52) including locations for storing data when said postage meter is not energized by said external source of operating power, said locations being human visually readable to determine said data stored therein.

13. A postage meter as claimed in claim 12, wherein said non-volatile memory means (52) is operatively coupled to said computing means (54) such that said computing means can write data into said non-volatile memory means (52) and can read stored data from said non-volatile memory means.

14.    A postage meter as claimed in claim 12 or 13, wherein said non-volatile memory means (52) is a plating display device.

15.    A postage meter as claimed in claim 14, wherein said non-volatile memory plating display device (52) includes first terminal means (14a) coupled to said computing means (54) for energizing said display to store and display data and second terminal means (14b) coupled to said computing means (54) for use by said computing means (54) for reading data stored in said display device (52).

16.    A postage meter as claimed in claim 14, including housing means (51) enclosing said printing means (58), said computing means (54) and said non-volatile memory means (52).

17.    A postage meter as claimed in claim 16, wherein said housing means (51) includes an aperture (53) and said non-volatile memory means (52) is positioned within said housing (51) adjacent said housing aperture (53) to enable data stored therein to be human visually readable through said housing aperture (53).

FIG. 1

FIG. 2

FIG. 3

FIG. 4

# FIG. 5

FIG. 6

0187374

0187374

# FIG.7